# EUROPÄISCHE PATENTSCHRIFT

(11) **EP 3 459 132 B1**
(45) Veröffentlichungstag und Bekanntmachung des Hinweises auf die Patenterteilung: **04.03.2026**
(21) Anmeldenummer: 17727501.3
(22) Anmeldetag: 16.05.2017
(51) Int. Cl.: H01M 10/48, H02J 7/00, H01M 10/42, H01M 50/588, H01M 50/583

(54) **ANORDNUNG MIT MULTIFUNKTIONALEM ANSCHLUSS FÜR ENERGIESPEICHERZELLEN ODER ENERGIEVERBRAUCHER**
ARRANGEMENT HAVING A MULTIFUNCTIONAL CONNECTION FOR ENERGY STORAGE CELLS OR ENERGY CONSUMERS
SYSTÈME À BORNE MULTIFONCTIONS POUR ÉLÉMENTS ACCUMULATEURS D'ÉNERGIE OU CONSOMMATEURS D'ÉNERGIE

(30) Priorität: 17.05.2016 DE 102016208420
(43) Veröffentlichungstag der Anmeldung: 27.03.2019
(73) Patentinhaber: Fraunhofer-Gesellschaft zur Förderung der angewandten Forschung e.V., 80686 München (DE)
(72) Erfinder: LORENTZ, Vincent, 91056 Erlangen (DE); MÄRZ, Martin, 90491 Nürnberg (DE); WENGER, Martin, 91058 Erlangen (DE)
(74) Vertreter: Gagel, Roland
(86) Internationale Anmeldenummer: PCT/EP2017/061652
(87) Internationale Veröffentlichungsnummer: WO 2017/198634

(56) Entgegenhaltungen:
- EP-A2- 2 642 582
- DE-A1- 102009 000 504
- US-A1- 2010 157 495
- US-A1- 2015 380 959

## Beschreibung

### Technisches Anwendungsgebiet

Die vorliegende Erfindung betrifft eine Anordnung mit multifunktionalem Anschluss für Energiespeicherzellen oder Energieverbraucher, die wenigstens eine Einrichtung zum Ladungsausgleich und/oder eine Messeinrichtung zur Messung einer elektrischen Spannung der Energiespeicherzellen oder Energieverbraucher und ein elektrisches Überbrückungselement mit einem elektrischen Anschluss aufweist, über den sich das Überbrückungselement zur Herstellung einer elektrischen Verbindung zwischen zwei voneinander isolierten elektrischen Leitern aktivieren lässt. Die Erfindung betrifft auch eine Reihenschaltung mehrerer Energiespeicherzellen oder Energieverbraucher, die jeweils mit einer derartigen Anordnung verbunden sind.

Für den sicheren und zuverlässigen Betrieb einer Reihenschaltung von Energiespeicherzellen, insbesondere von Lithium-Ionen-Batteriezellen, sind Überbrückungs- bzw. Bypasseinrichtungen erforderlich, die einzelne Zellen der Reihenschaltung im Fall eines Zellenfehlers elektrisch überbrücken können. Weiterhin erfordert der zuverlässige Betrieb auch eine Überwachung der Zellspannung der einzelnen Zellen sowie ggf. eine Einrichtung zum Ausgleich der Ladezustände (Balancing).

### Stand der Technik

Aus der DE 37 21 754 A1 ist eine Überbrückungseinrichtung zur Sicherung von Batteriezellen bekannt, die eine irreversible Überbrückung von hochohmig ausfallenden, zerstörten Speicherzellen ermöglicht. Die Überbrückungseinrichtung besteht aus zwei schichtweise in Reihe angeordneten Halbleiterbauelementen mit jeweils unterschiedlicher Strom/Spannungs-Charakteristik. Bei hochohmigem Ausfall einer zerstörten Speicherzelle fließt der hohe Ladestrom durch die beiden Halbleiterbauelemente, die aufgrund der daraus resultierenden starken Temperaturerhöhung durchlegieren und die Speicherzelle dadurch irreversibel niederohmig kurzschließen.

Die DE 10 2012 005 979 A1 beschreibt eine elektrische Überbrückungseinrichtung für die Überbrückung von defekten Speicherzellen in Energiespeichern, bei der zwischen zwei elektrischen Leitern eine Schichtfolge mit wenigstens einer elektrischen Isolationsschicht und einem oder mehreren reaktiven Schichtstapeln ausgebildet ist, in denen sich eine exotherme Reaktion auslösen lässt. Die reaktiven Schichtstapel und die Isolationsschicht sind so aufeinander abgestimmt, dass sich die Isolationsschicht durch die bei der exothermen Reaktion abgegebene Wärmeenergie auflöst und eine elektrische Verbindung zwischen den elektrischen Leitern hergestellt wird.

Die DE 10 2012 205 553 A1 beschreibt eine Batteriezelle mit einer Vorrichtung zur Abkopplung und/oder Überbrückung von Anschlüssen der Batteriezelle. Die Batteriezelle weist hierzu ein mechanisches Sicherungselement auf, das bei Auslösung bzw. Aktivierung die Anschlüsse der Batteriezelle abtrennt und/oder kurzschließt. Die Auslösung des mechanischen Sicherheitselementes erfolgt unter Verwendung eines elektrischen Auslösesignals auf Basis einer mit einem Überwachungssensor erfassten Messgröße. Details zum Aufbau und zur Verschaltung der einzelnen Elemente finden sich in dieser Druckschrift nicht.

Bisher müssen für den sicheren und zuverlässigen Betrieb einer Reihenschaltung von Energiespeicher- bzw. Batteriezellen mehrere Anschlussleitungen vorgesehen werden, um die Überbrückungseinrichtung, die Messeinrichtung zur Messung der elektrischen Spannung der Batteriezelle sowie die Einrichtung zum Ladungsausgleich mit der Batteriezelle zu verbinden. Diese Anschlussleitungen verursachen jedoch einerseits Kosten während der Produktion bzw. Montage des Batteriesystems, andererseits verringert sich durch diese Vielzahl an Anschlussleitungen auch die Zuverlässigkeit des Batteriesystems. Bisher wird dieses Problem durch klassische Methoden der Kostenoptimierung und Zuverlässigkeitserhöhung bei Kabelbäumen und Steckkontakten gelöst. Eine Reduzierung der Anzahl der Verbindungen ist bislang jedoch immer auch mit einer reduzierten Funktionalität verbunden. Ausgestaltungen, bei denen die Überbrückungseinrichtung ohne externe Ansteuerung auskommt und automatisch auslöst, erfordern jedoch jeweils einen stark erhöhten Widerstand der Batteriezelle oder eine Kontaktunterbrechung. Ein vorzeitiges Auslösen, etwa zur Verhinderung hoher Verlustleistungen, ist nicht möglich. Damit kann jedoch ein sicherer und zuverlässiger Betrieb des Batteriesystems nicht in jedem Falle gewährleistet werden.

Die Aufgabe der vorliegenden Erfindung besteht darin, eine Anordnung mit einem Anschluss für Energiespeicherzellen oder Energieverbraucher anzugeben, die sowohl die Ansteuerung einer Überbrückungseinrichtung als auch die Verbindung einer Messeinrichtung zur Messung der elektrischen Spannung der Energiespeicherzellen oder Energieverbraucher und/oder einer Einrichtung zum Ladungsausgleich mit einer geringeren Anzahl an Anschlussleitungen ermöglicht.

### Darstellung der Erfindung

Die Aufgabe wird mit der Anordnung mit multifunktionalen Anschluss gemäß Patentanspruch 1 gelöst. Patentanspruch 9 betrifft eine Reihenschaltung mehrerer Energiespeicherzellen oder Energieverbraucher, die jeweils mit einer derartigen Anordnung verbunden sind. Vorteilhafte Ausgestaltungen dieser Anordnung und der Reihenschaltung von Energiespeicherzellen oder Energieverbraucher sind Gegenstand der abhängigen Patentansprüche oder lassen sich der nachfolgenden Beschreibung sowie den Ausführungsbeispielen entnehmen.

Die vorgeschlagene Anordnung mit multifunktionalem Anschluss für Energiespeicherzellen oder Energieverbraucher umfasst wenigstens eine Einrichtung zum Ladungsausgleich und/oder eine Messeinrichtung zur Messung einer elektrischen Spannung der Energiespeicherzellen oder Energieverbraucher und ein elektrisches Überbrückungselement mit einem elektrischen Anschluss. Über diesen elektrischen Anschluss lässt sich das Überbrückungselement zur Herstellung einer elektrischen Verbindung zwischen zwei voneinander isolierten elektrischen Leitern auslösen bzw. aktivieren. Der elektrische Anschluss ist über das Überbrückungselement mit einem der beiden elektrischen Leiter elektrisch leitend verbunden. Einer der beiden elektrischen Leiter ist dabei elektrisch leitend mit einem ersten Pol und der andere elektrische Leiter elektrisch leitend mit einem zweiten Pol der Energiespeicherquelle oder des Energieverbrauchers verbunden oder verbindbar. Die Einrichtung zum Ladungsausgleich und/oder die Messeinrichtung sind mit dem elektrischen Anschluss des Überbrückungselementes und dadurch mit einem der beiden elektrischen Leiter verbunden. Weiterhin umfasst die Anordnung eine Auslöseschaltung zum Auslösen bzw. Aktivieren des elektrischen Überbrückungselementes, die parallel zur Einrichtung zum Ladungsausgleich und/oder der Messeinrichtung mit dem elektrischen Anschluss des Überbrückungselements verbunden ist. Die Begriffe des Auslösens und Aktivierens werden in der vorliegenden Patentanmeldung als Synonyme genutzt und bezeichnen daher den gleichen Vorgang.

Die vorgeschlagene Anordnung mit multifunktionalem Anschluss ermöglicht somit eine externe Ansteuerung des Überbrückungselementes, die Verbindung der Einrichtung zur Ladungssteuerung mit der Energiespeicherzelle und auch die Messung der Zellspannung der Energiespeicherzelle über nur eine Verbindungsleitung zu dem elektrischen Anschluss des Überbrückungselementes. Damit wird die Anzahl der Verbindungsleitungen gegenüber dem Stand der Technik bei gleichbleibender Funktionalität deutlich reduziert, so dass neben einer Kostenersparnis auch ein Betrieb einer entsprechenden Reihenschaltung von Energiespeicherzellen mit höherer Sicherheit und Zuverlässigkeit ermöglicht wird. Eine vergleichbare Problematik tritt bei Reihenschaltungen von Energieverbrauchern wie bspw. Leuchten oder Heizelementen auf. Die vorgeschlagene Anordnung lässt sich daher auch entsprechend mit Energieverbrauchern einsetzen. Im Folgenden werden unterschiedliche Ausgestaltungen der Anordnung in Verbindung mit Energiespeicherzellen erläutert. Diese Ausgestaltungen lassen sich jedoch in gleicher Weise auch in Verbindung mit Energieverbrauchern realisieren.

Die Auslösung des Überbrückungselementes erfolgt durch die Auslöseschaltung. Diese ist über den elektrischen Anschluss mit dem Überbrückungselement verbunden. Das Überbrückungselement ist derart ausgeführt und angeordnet, dass der elektrische Anschluss zum Auslösen des Überbrückungselementes über das Überbrückungselement elektrisch leitend mit einem der beiden elektrischen Leiter und damit mit einem der beiden Pole bzw. Leistungsanschlüsse der Energiespeicher- bzw. Batteriezelle verbunden ist. Die Auslösung des Überbrückungselementes kann bspw. durch Einschalten eines Auslösestromes durch die Auslöseschaltung erfolgen. Durch die leitende Verbindung des elektrischen Anschlusses mit einem der beiden Pole der Energiespeicherzelle kann dieser elektrische Anschluss, im Folgenden auch als multifunktionaler Anschluss bezeichnet, dazu verwendet werden, die Spannungen der in Reihe verbundenen Speicherzellen zu messen. Gleichzeitig kann der elektrische Anschluss auch dazu verwendet werden, eine Einrichtung zum Ladungsausgleich, auch als Balancingschaltung bezeichnet, mit der Energiespeicherzelle zu verbinden. Dies gilt auch für die Energiespeicherzellen in einer Reihenschaltung von gleichartigen Energiespeicherzellen.

In einer vorteilhaften Ausgestaltung weist das Überbrückungselement zwischen den beiden elektrischen Leitern eine Schichtfolge mit wenigstens einer elektrischen Isolationsschicht, die die beiden elektrischen Leiter gegeneinander elektrisch isoliert, und einer elektrisch leitfähigen reaktiven Schicht auf, in der sich über den elektrischen Anschluss eine exotherme Reaktion auslösen lässt, durch die sich die Isolationsschicht zumindest teilweise auflöst und dadurch eine elektrische Verbindung zwischen den elektrischen Leitern hergestellt wird. Das Überbrückungselement kann dabei wie in der DE 10 2012 005 979 A1 ausgebildet sein. Einer der beiden elektrischen Leiter ist dabei vorzugsweise elektrisch leitend mit der reaktiven Schicht verbunden, von der der elektrische Anschluss des Überbrückungselementes ausgeht. Da die reaktive Schicht elektrisch leitfähig ist, wird dadurch auch die elektrische Verbindung des elektrischen Anschlusses mit diesem elektrischen Leiter und damit einem Pol der Speicherzelle hergestellt. Die einzelnen Schichten des Überbrückungselementes müssen dabei nicht zwangsläufig stoffschlüssig miteinander verbunden sein, sondern können auch nur aufeinander liegen. Bei der vorgeschlagenen Anordnung wird ausgenutzt, dass zur Auslösung der exothermen Reaktion in einer reaktiven Schicht ein Stromfluss bestimmter Charakteristik, beispielsweise ein starker Stromgradienten, erforderlich ist, wie er bei Messung der Zellspannung mit einer entsprechenden Messeinrichtung oder bei Nutzung einer Einrichtung zum Ladungsausgleich nicht auftreten. Durch diese Einrichtungen kann daher die reaktive Schicht nicht ausgelöst werden, so dass der elektrische Anschluss des Überbrückungselementes auch von diesen Einrichtungen genutzt werden kann. Die Überbrückungseinrichtung kann auch so ausgebildet sein, dass die Auslösung der exothermen Reaktionen der reaktiven Schicht durch einen ausreichend hohen Stromfluss als Stromfluss bestimmter Charakteristik erfolgt, bspw. über lokale Wärmeerzeugung an einem Übergangswiderstand oder an einem Heizwiderstand. Auch in diesem Fall werden die dafür erforderlichen Stromflüsse weder durch die Messeinrichtung zur Messung der Zellspannung noch durch die Einrichtung zum Ladungsausgleich erreicht.

Die Auslöseschaltung ist daher vorzugsweise so ausgebildet, dass sie einen entsprechenden Stromfluss oder Stromgradienten über den elektrischen Anschluss an der reaktiven Schicht erzeugt. Vorzugsweise ist die Auslöseschaltung hierzu gemeinsam mit einem geeigneten Bezugspotential verbunden, so dass der Stromfluss zwischen dem Bezugspotential und dem elektrischen Anschluss am Übergangselement erfolgt. Als Bezugspotential kann dabei in einer Reihenschaltung von Energiespeicherzellen das höchste oder niedrigste Potential dieser Reihenschaltung genutzt werden. Auch ein speziell gewähltes Potential innerhalb der Reihenschaltung kann dafür herangezogen werden.

Ein Beispiel für eine reaktive Schicht ist eine reaktive Nanofolie, bspw. eine reaktive Ni/Al-Folie, wie sie bspw. aus der WO 01/83182 A1 bekannt ist. Derartige Nanofolien setzen sich aus einer großen Anzahl von Nanoschichten zusammen, bspw. mit Schichtdicken im Bereich von 1nm bis 500nm, wobei sich in der Regel Schichten aus zwei unterschiedlichen Materialien abwechseln, die durch geeigneten Energieeintrag exotherm miteinander reagieren. Auch andere reaktive Schichten sind in dem vorgeschlagenen Überbrückungselement einsetzbar, bspw. Schichten aus Nanothermit oder anderen exotherm reagierenden Materialien.

Das Überbrückungselement kann auch einen anderen Mechanismus nutzen, um die beiden elektrischen Leiter elektrisch zu verbinden. Der Mechanismus muss dabei so gewählt werden, dass die Auslösung des Überbrückungselementes wiederum durch einen Stromfluss bestimmter Charakteristik erfolgt, der nicht durch den Betrieb der Einrichtung zum Ladungsausgleich und/oder der Messeinrichtung über den elektrischen Anschluss auftritt.

Vorzugsweise ist die Einrichtung zum Ladungsausgleich (Balancingschaltung) so ausgebildet, dass der Ladungsausgleich durch Entladen der jeweiligen Speicherzelle über einen Widerstand erfolgt (passives Balancing). Es besteht auch die Möglichkeit, die Auslöseschaltung so zu gestalten, dass sie die Erweiterung einer passiven Balancingschaltung um eine niederohmige Überbrückungsmöglichkeit für den Entladewiderstand darstellt, bspw. mit einem MOSFET parallel zum Entladewiderstand. Weiterhin besteht in einer Reihenschaltung von Energiespeicherzellen auch die Möglichkeit, die Balancingschaltung so zu gestalten, dass der Ladungsausgleich durch Umverteilung der Ladung auf andere Speicherzellen über ein entsprechendes Verbindungsnetzwerk erfolgt (aktives Balancing). Die Auslöseschaltung muss in diesem Fall dann auch so ausgebildet sein, dass sie eine Erweiterung der aktiven Balancingschaltung um eine Abschaltmöglichkeit für die Strombegrenzung darstellt.

Die Energiespeicherzellen können auch eine Einrichtung zur Unterbrechung des Strompfades aufweisen, auch unter der Abkürzung CID (current interrupt device) bekannt. Mit den Überbrückungselementen der Anordnungen können dann in einer Reihenschaltung von Energiespeicherzellen auch eine oder mehrere Unterbrechungen der Reihenschaltung überbrückt werden, die bspw. durch ein oder mehrere CIDs verursacht werden.

Die Auslöseschaltung der vorgeschlagenen Anordnung kann in einer Reihenschaltung von Energiespeicherzellen auch jeweils so verschaltet sein, dass sie die zur Auslösung des Überbrückungselementes, bspw. zur Zündung der reaktiven Schicht eines entsprechen aufgebauten Überbrückungselementes, notwendige Energie mindestens einer anderen Energiespeicherzelle der Reihenschaltung entnimmt. Dies kann z. B. mittels einer sog. Flying Capacitor oder Switched Capacitor oder Bootstrap Schaltung erfolgen.

Der multifunktionale Anschluss der vorgeschlagenen Anordnung kann zum Auslösen eines Überbrückungselementes und gleichzeitig als Kontaktierung zur Zellspannungsmessung sowie als Anschluss für eine Balancingschaltung verwendet werden. Es ist hierzu nur eine Verbindungsleitung zur Energiespeicherzelle erforderlich. Damit wird die Anzahl der Verbindungsleitungen bzw. Anschlüsse für einen sicheren und zuverlässigen Betrieb einer Reihenschaltung von Energiespeicherzellen gegenüber dem Stand der Technik deutlich reduziert. Dies erhöht einerseits die Zuverlässigkeit des Gesamtsystems, da Verbindungen, Stecker und Kabel eine bekannte Schwachstelle insbesondere in mobilen Anwendungen (wegen Vibrationen) darstellen. Andererseits können durch die reduzierte Anzahl der Verbindungen die Kosten bei der Herstellung und Montage des jeweiligen Batteriesystems reduziert werden. Die vorgeschlagene Anordnung lässt sich für alle Anwendungsgebiete von entsprechenden elektrischen Überbrückungselementen einsetzen, bei denen mindestens auch eine Zellspannung, bspw. in Batterien oder Brennstoffzellen, gemessen werden muss.

### Kurze Beschreibung der Zeichnungen

Die vorgeschlagene Anordnung mit multifunktionalem Anschluss wird nachfolgend anhand von Ausführungsbeispielen in Verbindung mit den Zeichnungen nochmals näher erläutert. Hierbei zeigen:
- Fig. 1: eine schematische Darstellung einer Batteriespeicherzelle mit dem bei der vorliegenden Erfindung eingesetzten Überbrückungselement;
- Fig. 2: eine detailliertere Darstellung einer beispielhaften Ausgestaltung des Überbrückungselementes gemäß der vorliegenden Erfindung;
- Fig. 3: ein Beispiel für eine Ausgestaltung der vorgeschlagenen Anordnung mit multifunktionellem Anschluss an einer Batteriezelle;
- Fig. 3a: ein Beispiel für eine Ausgestaltung der Einrichtung zum Ladungsausgleich;
- Fig. 3b: ein Beispiel für eine Auslöseschaltung zur niederohmigen Überbrückung des Entladewiderstandes der Einrichtung aus Fig. 3a;
- Fig. 4: ein Beispiel für die Verschaltung mehrerer der vorgeschlagenen Anordnungen in einer Reihenschaltung von Batteriezellen;
- Fig. 5: das Beispiel der Figur 4 mit einer detaillierteren Darstellung der beispielhaft eingesetzten Überbrückungselemente;
- Fig. 6: verschiedene schematische Darstellungen der Strompfade beim Auslösen des Überbrückungselementes im Falle einer fehlerhaften Batteriezelle in einer Reihenschaltung von Batteriezellen;
- Fig. 7: eine schematische Darstellung der Strompfade beim Auslösen von zwei Überbrückungselementen in einer Reihenschaltung von Batteriezellen; und
- Fig. 8: eine beispielhafte Verschaltung der Überbrückungselemente der obersten und untersten Zelle einer Reihenschaltung von Batteriezellen.

### Wege zur Ausführung der Erfindung

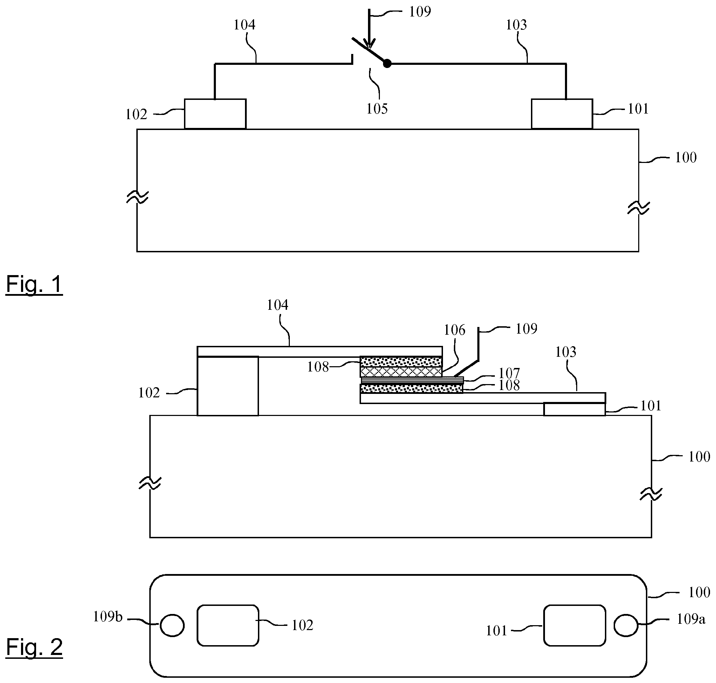

Bei der vorgeschlagenen Anordnung mit multifunktionalem Anschluss wird ein Überbrückungselement zur elektrischen Überbrückung einer defekten Batteriezelle eingesetzt, das über einen mit dem Überbrückungselement verbundenen elektrischen Anschluss ausgelöst werden kann, um die Batteriezelle zu überbrücken. Figur 1 zeigt hierzu in schematischer Darstellung eine Energiespeicherzelle 100 mit den beiden Zellanschlüssen bzw. Polen 101, 102 der Batteriezelle. Das eingesetzte Überbrückungselement 105 weist zwei elektrische Leiter 103, 104 auf, die mit den beiden Polen 101, 102 der Batteriezelle 100 verbunden sind. Das Überbrückungselement 105 wird über den elektrischen Anschluss 109 ausgelöst. Beim Auslösen des Überbrückungselementes 105 wird eine elektrische Verbindung zwischen den beiden elektrischen Leitern 103, 104 des Überbrückungselementes hergestellt und dadurch die beiden Pole 101, 102 der Batteriezelle 100 kurzgeschlossen.

Besonders vorteilhaft lässt sich ein derartiges Überbrückungselement in einer Ausgestaltung realisieren, wie sie in der oberen Teilabbildung der Figur 2 im Querschnitt dargestellt ist. Das Überbrückungselement weist hierbei die beiden elektrischen Anschlüsse bzw. Leiter 103, 104 auf, zwischen denen eine Schichtfolge aus einer lotfähigen Schicht 108, einer reaktiven Schicht 107, einer elektrischen Isolationsschicht 106 und einer weiteren lotfähigen Schicht 108 ausgebildet ist. Die reaktive Schicht 107 ist dabei aus einem oder mehreren reaktiven Schichtstapeln, vorzugsweise in Form einer oder mehrerer reaktiver Nanofolien ausgebildet, in denen sich eine exotherme Reaktion auslösen lässt. Die Isolationsschicht 106 dient der hochohmigen Isolation der beiden elektrischen Leiter 103, 104 und damit auch der beiden Pole 101, 102 der Batteriezelle 100.

Die Auslösung der reaktiven Schicht 107 und damit des Überbrückungselementes erfolgt über den an der reaktiven Schicht angebrachten elektrischen Anschluss 109. Dieser ist mit einer in der Figur nicht dargestellten Auslöseeinrichtung verbunden. Dies kann bspw. eine Strom- oder Spannungsquelle (z.B. ein vorgeladener Kondensator) sein. Die Auslösung erfolgt dabei durch einen Strom- oder Spannungspuls oder auch durch einen Strom ausreichender Stärke, mit denen die exotherme Reaktion in der reaktiven Schicht 107 ausgelöst werden kann. In Folge dieser Reaktion kommt es zu einer starken Wärmeentwicklung. Durch diese Wärme wird die Isolationsschicht 106 zumindest teilweise aufgelöst. Aufgrund der hohen Wärmeentwicklung schmelzen auch die beiden Lotschichten 108. Die Isolatorrückstände lösen sich dabei im Lot und es kommt zu einem elektrischen Kontakt zwischen den beiden elektrischen Leitern 103, 104 und somit zu einer elektrischen Überbrückung der Batteriezelle 100.

Wie aus der Figur 2 zu erkennen ist, steht der elektrische Anschluss 109 über die elektrisch leitfähige reaktive Schicht 107 und die Lotschicht 108 auch in elektrischem Kontakt mit einem Pol 101 der Batteriezelle. Dies wird bei der vorliegenden Erfindung ausgenutzt, um über diesen elektrischen Anschluss 109 auch andere Einrichtungen mit diesem Pol der Batteriezelle zu verbinden.

In der unteren Teilabbildung der Figur 2 ist eine Ansicht von oben auf die Batteriezelle 100 mit den beiden Polen 101, 102 schematisch dargestellt. In dieser Darstellung ist auch ein entsprechender elektrischer Anschluss 109a zu erkennen, der dem elektrischen Anschluss 109 der oberen Teilabbildung entspricht. Zusätzlich ist ein weiterer elektrischer Anschluss 109b dargestellt, der optional vorgesehen sein kann und auch dem elektrischen Anschluss 109 der oberen Teilabbildung entspricht. Der Anschluss 109b ist elektrisch mit dem Anschluss 109a verbunden und vereinfacht die Kontaktierung, wenn Batteriezellen in Reihe geschalten werden und alternierend die Pole 101 und 102 mit den Nachbarzellen verbunden werden (Aufbau eines Batteriemoduls). Die Anschlüsse 109a und 109b ermöglichen es, beim Aufbau von mehreren Batteriezellen in Reihe, den multifunktionalen Anschluss 109 immer auf derselben Seite des Moduls zu haben.

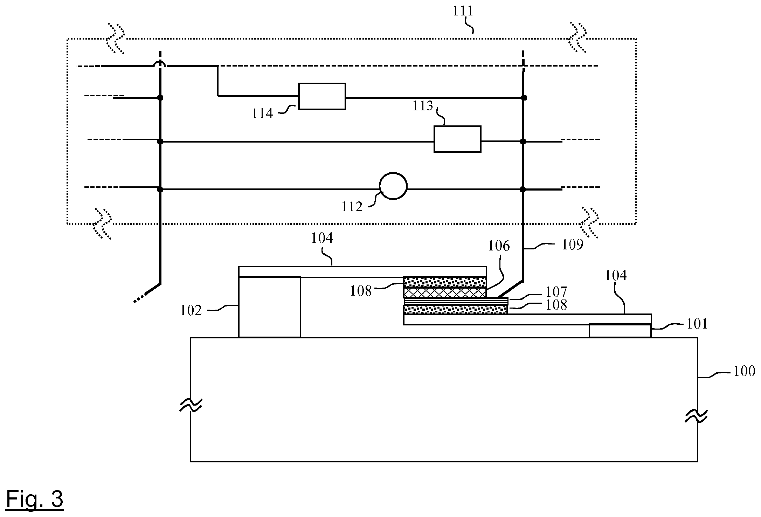

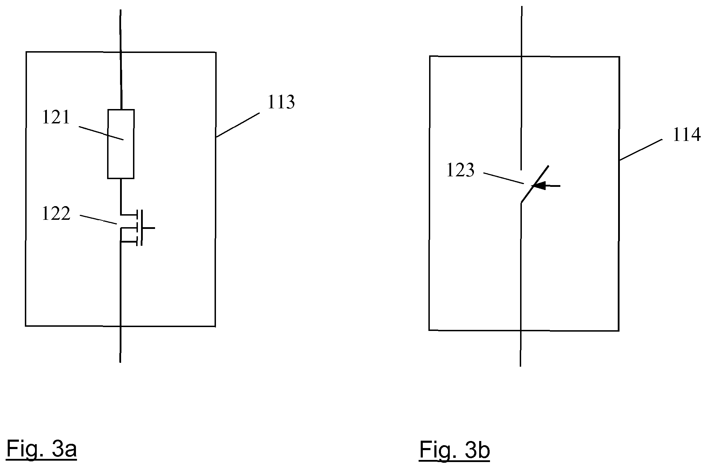

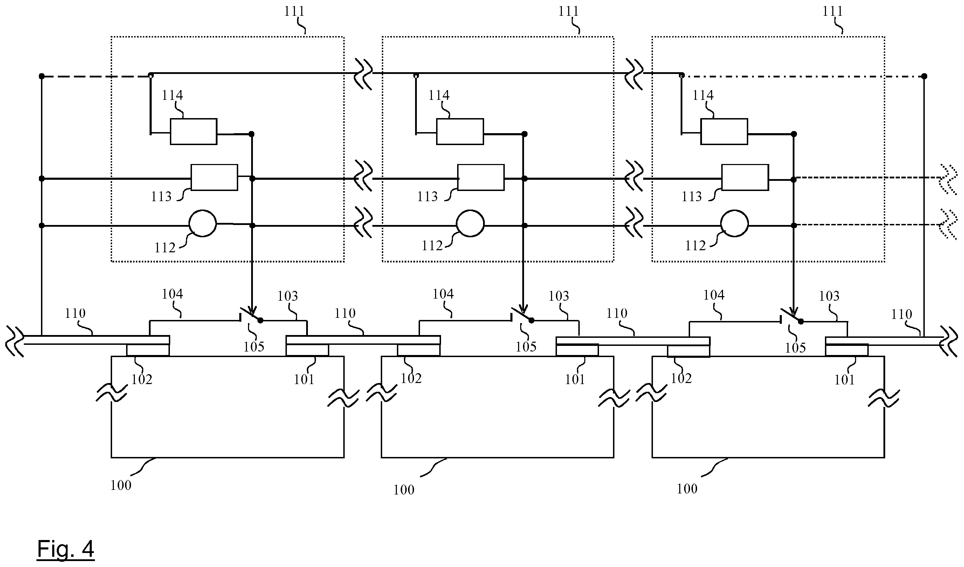

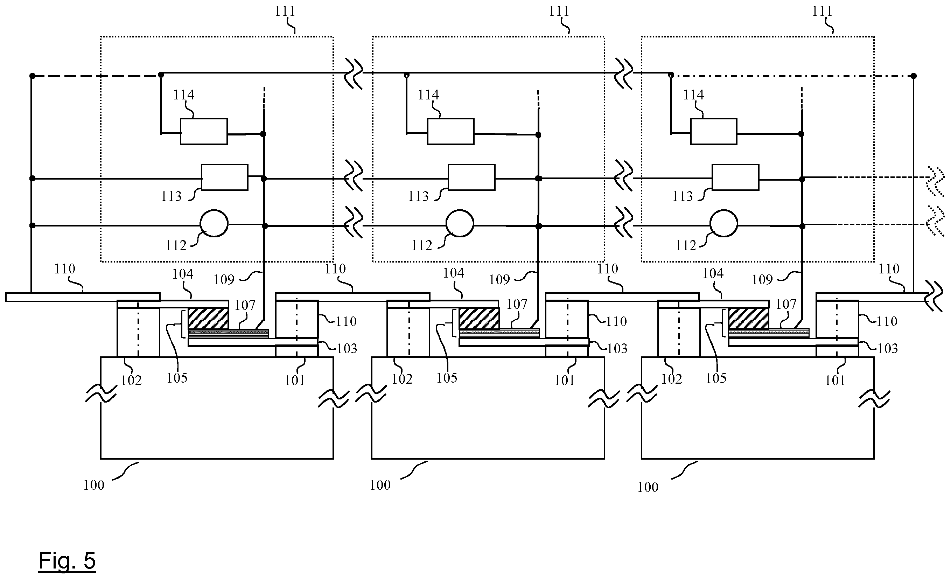

Durch die elektrische Verbindung des für die Auslösung des Überbrückungselementes 105 genutzten elektrischen Anschlusses 109 mit einem Pol der Batteriezelle 100 kann dieser Anschluss auch für weitere Einrichtungen genutzt werden, die mit diesem Pol der Batteriequelle verbunden werden müssen. Dies ist beispielhaft und teilweise schematisiert in Figur 3 dargestellt, die ein Beispiel für die vorgeschlagene Anordnung zeigt. Mit dem multifunktionalen elektrischen Anschluss 109 sind dabei in einer Überwachungs- bzw. Ansteuerschaltung 111 eine Messeinrichtung 112 zur Spannungsmessung, eine Balancingschaltung 113 für einen Ladungsausgleich sowie die Auslöseschaltung 114 zum Auslösen des Überbrückungselementes verbunden. Die Auslöseschaltung 114 ist über ein Verbindungselement (Busbar) 110 (vgl. Fig. 4/5) mit einem Bezugspotential verbunden. Dieses Bezugspotential wird vorzugsweise für alle Auslöseschaltungen 114 einer Reihenschaltung von entsprechenden Batteriezellen 100 genutzt. Die Messeinrichtung 112 sowie die Balancingschaltung 113 sind wiederum mit einem anderen Potential, im vorliegenden Fall über den elektrischen Anschluss 109 des nächsten Überbrückungselementes mit dem entsprechenden Pol 101 der benachbarten Batteriezelle 100 verbunden. Dies ist in Figur 4 nochmals schematisch dargestellt, die drei in Reihe geschaltete Batteriezellen 100 mit den entsprechenden Anordnungen, d.h. Überbrückungselementen 105 und Überwachungs- bzw. Ansteuerschaltungen 111 zeigt. Das Bezugspotential für die Auslöseschaltungen 114 kann dabei beispielsweise von der obersten Zelle einer Reihenschaltung (höchste Spannung) oder auch alternativ von der untersten Zelle einer Reihenschaltung bezogen werden, wie dies mit den beiden unterschiedlich gestrichelten Passagen der oberen Verbindungsleitung in der Figur angedeutet ist, von denen immer nur eine als Verbindung realisiert werden kann.

Die Auslöseschaltung 114 kann hierbei bspw. durch eine Spannungsquelle oder eine Stromquelle wie z.B. einen geladenen Kondensator realisiert sein, der sich bei Auslösung in die reaktive Schicht des Überbrückungselementes entlädt, um sie zu aktivieren. Es kann sich auch um einen Transistor, wie bspw. einen MOSFET oder einen Thyristor handeln, der den Aktivierungsstrom für die reaktive Schicht auslöst.

Figur 3a zeigt ein Beispiel für eine Balancingschaltung 113, bei der der Ladungsausgleich durch Entladen der jeweiligen Speicherzelle über einen Entladewiderstand 121 erfolgt. Der Ladungsausgleich wird über einen Entladeschalter 122 aktiviert. Die Auslöseschaltung 114 kann dabei so gestaltet werden, dass sie den Entladewiderstand 121 der Balancingschaltung für eine Aktivierung der Überbrückungseinrichtung mit einer Schalteinrichtung 123 niederohmig überbrückt. Eine entsprechende Auslöseschaltung ist in Figur 3b beispielhaft darstellt.

Figur 5 zeigt diese Ausgestaltung nochmals in detaillierterer Form, in der die reaktive Schicht 107 und die elektrischen Leiter 103, 104 des Überbrückungselementes 105 zu erkennen sind.

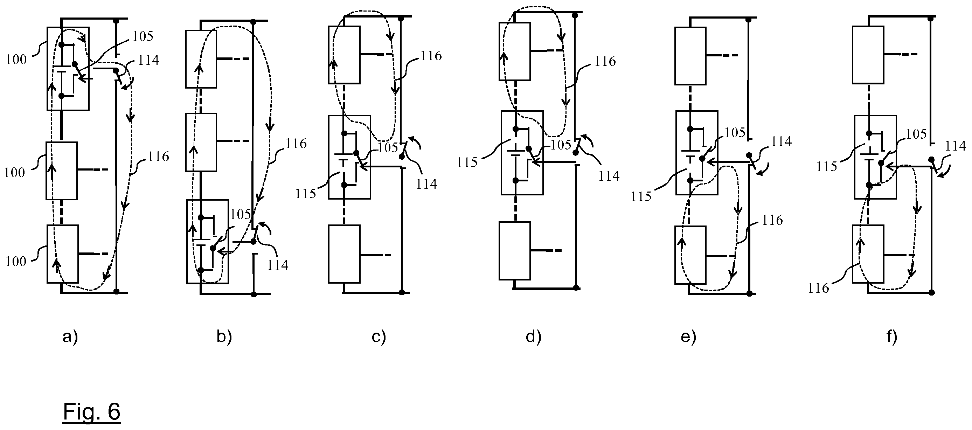

Figur 6 zeigt beispielhaft in stark schematisierter Darstellung die Strompfade bei verschiedenen Fehlerfällen anhand einer Reihenschaltung von drei Batteriezellen 100 mit den entsprechenden Überbrückungselementen 105. In der Figur ist hierbei jeweils das Überbrückungselement 105 nur an der Batteriezelle angedeutet, bei der eine Überbrückung erforderlich ist. Die Auslöseschaltung 114 ist in den Figuren ebenfalls lediglich durch einen Schalter angedeutet. Jede Batteriezelle 100 weist dabei die beiden elektrischen Leitungsanschlüsse bzw. Pole auf, über die die Batteriezellen in Reihenschaltung miteinander verbunden sind.

In Teilabbildung 6a) ist hierbei ein Fall dargestellt, bei dem die oberste Batteriezelle der Reihenschaltung überbrückt werden soll, wobei in diesem Fall als Bezugspotential für die Auslöseschaltung das der untersten Batteriezelle genutzt wird. Der Strompfad 116 zum Auslösen des Überbrückungselements 105 der obersten Zelle ist dabei durch die gestrichelte Linie mit den Pfeilen angedeutet. In der Teilabbildung 6b) wird entsprechend ein beispielhafter Strompfad zum Auslösen des Überbrückungselements 105 der untersten Zelle dargestellt, bei dem als Bezugspotential für die Auslöseschaltung das Potential der obersten Zelle genutzt wird.

Das Überbrückungselement lässt sich auch dazu einsetzen, eine Unterbrechung einer Batteriezelle, bspw. durch ein offenes CID 115, zu überbrücken, wie dies beispielhaft in den folgenden Teilabbildungen dargestellt ist. Teilabbildung 6c) zeigt hierzu eine Möglichkeit zum Auslösen des Überbrückungselementes der mittleren Zelle bei einer in der Figur dargestellten Unterbrechung. In diesem Fall wird als Bezugspotential für die Auslöseschaltung die Spannung der obersten Batteriezelle genutzt. Auch in dieser wie auch in den folgenden Teilabbildungen ist der zur Auslösung genutzte Strompfad 116 wiederum mit den gestrichelten Linien mit den Pfeilen angedeutet. In der Teilabbildung 6d) befindet sich die Unterbrechung am anderen Pol der mittleren Batteriezelle. Auch hier ist die Auslöseschaltung wieder mit dem Potential der obersten Zelle als Bezugspotential verbunden. Die Teilabbildungen 6e) und 6f) zeigen vergleichbare Fälle, bei denen jedoch als Bezugspotential das Potential der untersten Zelle verwendet wird.

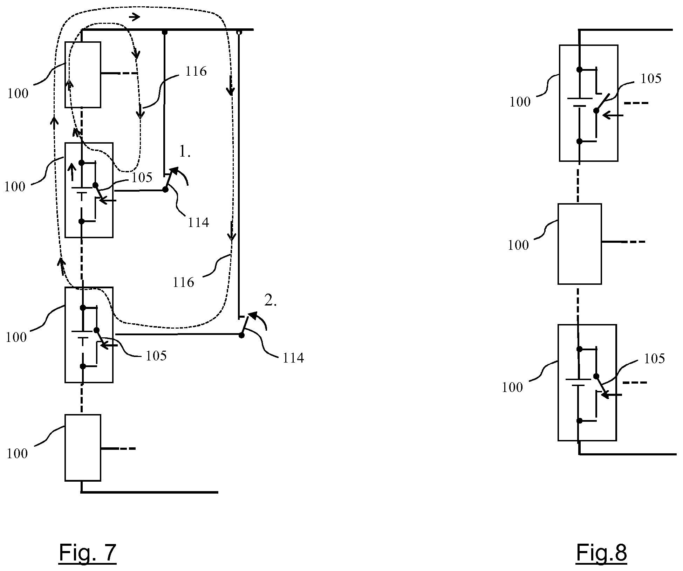

Bei einem Ausfall von mehr als zwei Batteriezellen in einer Reihenschaltung müssen die einzelnen Überbrückungselemente geeignet nacheinander ausgelöst werden. Dies ist anhand des Beispiels der Figur 7 dargestellt. Diese Figur zeigt die Reihenschaltung von vier Batteriezellen 100, wobei die beiden mittleren Batteriezellen gleichzeitig ausfallen und überbrückt werden müssen. Beide Auslöseschaltungen sind hierbei mit dem Potential der obersten Zelle als Bezugspotential verbunden. Zur Auslösung beider Überbrückungselemente wird zunächst das Überbrückungselement der näher am Bezugspotential liegenden Zelle ausgelöst. Der entsprechende Strompfad 116 ist dabei wiederum in der Figur dargestellt. Anschließend kann das in der Reihenschaltung weiter unten liegende Überbrückungselement ausgelöst werden, wobei der resultierende Strompfad 116 in der Figur ebenfalls dargestellt ist. Bei mehr als zwei defekten Batteriezellen einer Reihenschaltung wird dieses Auslöseprinzip analog angewendet.

Es können Fehlerfälle auftreten, die nicht durch einfaches Verbinden des multifunktionalen Anschlusses aller Batteriezellen mit dem höchsten oder dem niedrigsten Potential der Reihenschaltung zum Auslösen der Überbrückungselemente abgedeckt werden können. Dies betrifft Fehlerfälle in der jeweils obersten oder untersten Batteriezelle. Diese Problematik lässt sich vermeiden, in dem der elektrische Anschluss des Überbrückungselementes bei der obersten Zelle nicht mit dem Pol mit dem höchsten Potential und bei der untersten Zelle nicht mit dem Pol mit dem niedrigsten Potential verbunden wird, wie dies in der Figur 8 schematisch angedeutet ist. Alternativ kann selbstverständlich auch die Auslöseschaltung in anderer Form ausgebildet werden (z.B. mittels eines vorgeladenen Kondensators, wie dies in einer sog. Flying Capacitor oder Switched Capacitor oder Bootstrap Schaltung der Fall ist).

### Bezugszeichenliste

- 100: Batteriezelle
- 101: Zellanschluss bzw. Pol
- 102: Zellanschluss bzw. Pol
- 103: elektrischer Leiter
- 104: elektrischer Leiter
- 105: Überbrückungselement
- 106: Isolationsschicht
- 107: reaktive Schicht
- 108: Lotschicht/Lotdepot
- 109: elektrischer Anschluss
- 109a: elektrischer Anschluss
- 109b: elektrischer Anschluss
- 110: Verbindungselement
- 111: Überwachungs-/Ansteuerschaltung
- 112: Einrichtung zur Spannungsmessung
- 113: Balancingschaltung
- 114: Auslöseschaltung
- 115: CID
- 116: Strompfad
- 121: Entladewiderstand
- 122: Entladeschalter
- 123: Schalteinrichtung

## Patentansprüche

1. Anordnung mit multifunktionalem Anschluss für Energiespeicherzellen oder Energieverbraucher, die wenigstens
- eine Einrichtung zum Ladungsausgleich (113) von Energiespeicherzellen und/oder eine Messeinrichtung (112) zur Messung einer elektrischen Spannung von Energiespeicherzellen oder Energieverbrauchern,
- ein elektrisches Überbrückungselement (105) mit einem elektrischen Anschluss (109), über den sich das Überbrückungselement (105) zur Herstellung einer elektrischen Verbindung zwischen zwei voneinander isolierten elektrischen Leitern (103, 104) aktivieren lässt und der über das Überbrückungselement (105) mit einem der beiden elektrischen Leiter (103, 104) elektrisch leitend verbunden ist, und
- eine mit dem elektrischen Anschluss (109) verbundene Auslöseschaltung (114) zur Auslösung des Überbrückungselementes (105) aufweist, wobei ein erster der elektrischen Leiter (103) elektrisch leitend mit einem ersten Pol (101) und ein zweiter der elektrischen Leiter (104) elektrisch leitend mit einem zweiten Pol (102) einer Energiespeicherzelle (100) oder eines Energieverbrauchers verbunden ist, und
die Einrichtung zum Ladungsausgleich (113) und/oder die Messeinrichtung (112) mit dem elektrischen Anschluss (109) des Überbrückungselementes (105) verbunden ist, so dass der elektrische Anschluss (109) den multifunktionalen Anschluss bildet.

2. Anordnung nach Anspruch 1,
**dadurch gekennzeichnet,**
**dass** das Überbrückungselement (105) zwischen den beiden elektrischen Leitern (103, 104) eine Schichtfolge mit wenigstens einer elektrischen Isolationsschicht (106), die die beiden elektrischen Leiter (103, 104) gegeneinander elektrisch isoliert, und einer elektrisch leitfähigen reaktiven Schicht (107) aufweist, in der sich über den elektrischen Anschluss (109) eine exotherme Reaktion auslösen lässt, durch die sich die Isolationsschicht (106) zumindest teilweise auflöst und die elektrisch leitende Verbindung zwischen den elektrischen Leitern (103, 104) hergestellt wird.

3. Anordnung nach Anspruch 2,
**dadurch gekennzeichnet,**
**dass** einer der beiden elektrischen Leiter (103, 104) elektrisch leitend mit der reaktiven Schicht (107) verbunden ist und der elektrische Anschluss (109) an der reaktiven Schicht (107) ausgebildet ist.

4. Anordnung nach Anspruch 2 oder 3,
**dadurch gekennzeichnet,**
**dass** die Schichtfolge auch eine oder mehrere elektrisch leitfähige Lotschichten (108) aufweist, die durch die exotherme Reaktion in der reaktiven Schicht (107) aufschmelzen und eine Lotverbindung zwischen den beiden elektrischen Leitern (103, 104) herstellen.

5. Anordnung nach einem der Ansprüche 1 bis 4, **dadurch gekennzeichnet,**
**dass** das Überbrückungselement (105) so ausgebildet ist, dass es sich durch einen Stromfluss bestimmter Charakteristik über den elektrischen Anschluss (109) aktivieren lässt.

6. Anordnung nach Anspruch 5,
**dadurch gekennzeichnet,**
**dass** die Charakteristik so gewählt ist, dass ein Stromfluss mit dieser Charakteristik nicht durch den Betrieb der Einrichtung zum Ladungsausgleich (113) und/oder der Messeinrichtung (112) über den elektrischen Anschluss (109) erzeugt wird.

7. Anordnung nach einem der Ansprüche 1 bis 6, **dadurch gekennzeichnet,**
**dass** die Einrichtung zum Ladungsausgleich (113) so ausgebildet ist, dass der Ladungsausgleich durch Entladen der Energiespeicherzelle (100) über einen Entladewiderstand (121) erfolgt.

8. Anordnung nach Anspruch 7,
**dadurch gekennzeichnet,**
**dass** die Auslöseschaltung (114) durch eine Schalteinrichtung (123) zur niederohmigen Überbrückung des Entladewiderstandes der Einrichtung zum Ladungsausgleich (113) gebildet ist.

9. Reihenschaltung mehrerer Energiespeicherzellen oder Energieverbraucher, die jeweils mit einer Anordnung nach einem der Ansprüche 1 bis 8 verbunden sind.

10. Reihenschaltung nach Anspruch 9, bei der die Auslöseschaltung (114) jeder Anordnung mit einem Bezugspotential verbunden ist, das von einer der Energiespeicherzellen (100) oder Energieverbraucher der Reihenschaltung abgeleitet wird.

11. Reihenschaltung nach Anspruch 10, bei der das Bezugspotential das höchste oder das niedrigste Potential der Reihenschaltung ist.

12. Reihenschaltung nach einem der Ansprüche 9 bis 11, bei der die Einrichtung zum Ladungsausgleich (113) als aktive Ladungsausgleichschaltung ausgebildet ist.

13. Reihenschaltung nach Anspruch 12, bei der die Auslöseschaltung (114) durch eine Schalteinrichtung zur niederohmigen Überbrückung einer in der Ladungsausgleichschaltung eingesetzten Komponente oder Teilschaltung zur Strombegrenzung gebildet ist.

14. Reihenschaltung nach einem der Ansprüche 9 bis 13, bei der die Auslöseschaltung (114) so ausgebildet und verschaltet ist, dass sie eine für die Auslösung des Überbrückungselementes (105) erforderliche Energie von wenigstens einer der anderen Energiespeicherzellen (100) der Reihenschaltung entnimmt.

15. Reihenschaltung nach einem der Ansprüche 9 bis 14, bei der der elektrische Anschluss (109) des Überbrückungselementes (105) als Bestandteil eines elektrischen Verbindungselementes (Busbar) ausgeführt ist, das Pole unterschiedlicher Energiespeicherzellen oder Energieverbraucher der Reihenschaltung miteinander verbindet.

## Claims

1. An arrangement having a multifunctional connection for energy storage cells or energy consumers, said arrangement comprising at least
- a device for charge equalisation (113) of energy storage cells and/or a measuring device (112) for measuring an electrical voltage of the energy storage cells or energy consumers,
- an electrical bridging element (105) having an electrical connection (109) via which the bridging element (105) can be activated to establish an electrical connection between two electrical conductors (103, 104) which are insulated from one another and which is connected in an electrically conductive manner to one of the two electrical conductors (103, 104) via the bridging element (105), and
- a trigger circuit (114) which is connected to the electrical connection (109), for triggering the bridging element (105),
wherein a first of the electrical conductors (103) is connected in an electrically conductive manner to a first pole (101), and a second of the electrical conductors (104) is connected in an electrically conductive manner to a second pole (102) of an energy storage cell (100) or energy consumer, and
the device for charge equalisation (113) and/or the measuring device (112) is connected to the electrical connection (109) of the bridging element (105), so that the electrical connection (109) forms the multifunctional connection.

2. The arrangement according to Claim 1,
**characterised in that**
the bridging element (105) has between the two electrical conductors (103, 104) a layer sequence having at least one electrical insulation layer (106), which insulates the two electrical conductors (103, 104) from each other, and an electrically conductive reactive layer (107), in which an exothermic reaction can be triggered via the electrical connection (109), by means of which reaction the insulation layer (106) at least partially melts, and the electrically conductive connection between the electrical conductors (103, 104) is produced.

3. The arrangement according to Claim 2, **characterised in that**
one of the two electrical conductors (103, 104) is connected in an electrically conductive manner to the reactive layer (107), and the electrical connection (109) is formed at the reactive layer (107).

4. The arrangement according to Claim 2 or 3, **characterised in that**
the layer sequence also has one or more electrically conductive solder layers (108), which melt as a result of the exothermic reaction in the reactive layer (107) and produce a solder connection between the two electrical conductors (103, 104).

5. The arrangement according to any one of Claims 1 to 4,
**characterised in that**
the bridging element (105) is designed such that it can be activated via the electrical connection (109) by a current flow of a certain characteristic.

6. The arrangement according to Claim 5, **characterised in that**
the characteristic is selected such that a current flow having this characteristic is not generated via the electrical connection (109) by the operation of the device for charge equalisation (113) and/or the measuring device (112).

7. The arrangement according to any one of Claims 1 to 6,
**characterised in that**
the device for charge equalisation (113) is designed such that the charge equalisation takes place by discharging the energy storage cell (100) via a discharge resistor (121).

8. The arrangement according to Claim 7, **characterised in that**
the trigger circuit (114) is formed by a switching device (123) for low-resistance bridging of the discharge resistor of the device for charge equalisation (113).

9. A series circuit of multiple energy storage cells or energy consumers which are each connected to an arrangement according to any one of Claims 1 to 8.

10. The series circuit according to Claim 9, in which the trigger circuit (114) of each arrangement is connected to a reference potential which is derived from one of the energy storage cells (100) or energy consumers of the series circuit.

11. The series circuit according to Claim 10, in which the reference potential is the highest or the lowest potential of the series circuit.

12. The series circuit according to any one of Claims 9 to 11, in which the device for charge equalisation (113) is in the form of an active charge equalisation circuit.

13. The series circuit according to Claim 12, in which the trigger circuit (114) is formed by a switching device for low-resistance bridging of a component or sub-circuit for current limitation which is used in the charge equalisation circuit.

14. The series circuit according to any one of Claims 9 to 13, in which the trigger circuit (114) is designed and interconnected such that it draws energy required for triggering the bridging element (105) from at least one of the other energy storage cells (100) of the series circuit.

15. The series circuit according to any one of Claims 9 to 14, in which the electrical connection (109) of the bridging element (105) is designed as a part of an electrical connection element (busbar) which connects poles of different energy storage cells or energy consumers of the series circuit to one another.

## Revendications

1. Système à borne multifonctions pour éléments accumulateurs d'énergie ou consommateurs d'énergie, qui présente au moins :
- un dispositif d'égalisation de charge (113) des éléments accumulateurs d'énergie et/ou un système de mesure (112) d'une tension électrique des éléments accumulateurs d'énergie ou des consommateurs d'énergie ;
- un élément de pontage électrique (105) muni d'une borne électrique (109), via laquelle l'élément de pontage (105) peut être activé afin d'établir une connexion électrique entre deux conducteurs électriques isolés l'un de l'autre (103, 104) et qui est connecté électriquement à un des deux conducteurs électriques (103, 104) via l'élément de pontage (105) ;
- un circuit de déclenchement (114) connecté à la borne électrique (109) pour déclencher l'élément de pontage (105), de sorte qu'un premier conducteur (103) soit connecté électriquement à un premier pôle (101) et qu'un deuxième conducteur (104) soit connecté électriquement à un deuxième pôle (102) d'une élément accumulateur d'énergie (100) ou d'un consommateur d'énergie et le dispositif d'égalisation de charge (113) et/ou le système de mesure (112) est connecté à la borne électrique (109) de l'élément de pontage (105), de sorte que la borne électrique (109) forme la borne multifonctions.

2. Système selon la revendication 1, **caractérisé en ce que** l'élément de pontage (105) entre les deux conducteurs électriques (103, 104) comprend une séquence de couches avec au moins une couche isolante (106) qui isole électriquement les deux conducteurs électriques (103, 104) l'un de l'autre et une couche réactive électriquement conductrice (107), dans laquelle une réaction exothermique peut être déclenchée via la borne électrique (109), provoquant la dissolution au moins partielle de la couche isolante (106) et l'établissement d'une connexion électrique entre les conducteurs électriques (103, 104).

3. Système selon la revendication 2, **caractérisé en ce qu'**un des deux conducteurs électriques (103, 104) est connecté électriquement à la couche réactive (107) et que la borne électrique (109) est formée sur la couche réactive (107).

4. Système selon la revendication 2 ou 3, **caractérisé en ce que** la séquence de couches comporte également une ou plusieurs couches de soudure électriquement conductrices (108), qui fondent par réaction exothermique dans la couche réactive (107) et créent une liaison de soudure entre les deux conducteurs électriques (103, 104).

5. Système selon une quelconque des revendications 1 à 4, **caractérisé en ce que** l'élément de pontage (105) est configuré de manière à pouvoir être activé par un courant présentant une caractéristique spécifique via la borne électrique (109).

6. Système selon la revendication 5, **caractérisé en ce que** la caractéristique est sélectionnée de telle sorte qu'aucun courant présentant cette caractéristique ne soit généré par le fonctionnement du dispositif d'égalisation de charge (113) et/ou du système de mesure (112) via la borne électrique (109).

7. Système selon une quelconque des revendications 1 à 6, **caractérisé en ce que** le dispositif d'égalisation de charge (113) est configuré de telle sorte que l'égalisation de charge soit obtenue par décharge de l'élément accumulateur d'énergie (100) via une résistance de décharge (121).

8. Système selon la revendication 7, **caractérisé en ce que** le circuit de déclenchement (114) est constitué d'un système de commutation (123) permettant un pontage à faible impédance de la résistance de décharge du dispositif d'égalisation de charge (113).

9. Circuit en série de plusieurs éléments accumulateurs d'énergie ou consommateurs d'énergie, qui sont respectivement connectés à un système selon une quelconque des revendications 1 à 8.

10. Circuit en série selon la revendication 9, dans lequel le circuit de déclenchement (114) de chaque système est connecté à un potentiel de référence qui est dérivé d'un des éléments accumulateurs d'énergie (100) ou des consommateurs d'énergie du circuit en série.

11. Circuit en série selon la revendication 10, dans lequel le potentiel de référence est le potentiel le plus élevé ou le plus bas du circuit en série.

12. Circuit en série selon une des revendications 9 à 11, dans lequel le dispositif d'égalisation de charge (113) est configuré comme un circuit d'égalisation de charge actif.

13. Circuit en série selon la revendication 12, dans lequel le circuit de déclenchement (114) est formé par un dispositif de circuit pour le pontage à basse valeur ohmique d'un composant employé dans le circuit d'égalisation de charge ou d'un circuit partiel de limitation du courant.

14. Circuit en série selon la revendication 12, dans lequel le circuit de déclenchement (114) est configuré et connecté de manière à puiser l'énergie nécessaire au déclenchement de l'élément de pontage (105) à partir d'au moins une des autres éléments accumulateurs d'énergie (100) du circuit en série.

15. Circuit en série selon une des revendications 9 à 14, dans lequel la borne électrique (109) de l'élément de pontage (105) est conçue comme un composant essentiel d'un élément de borne électrique (barre omnibus), qui connecte en série les pôles de différents éléments accumulateurs d'énergie ou de différents consommateurs d'énergie du circuit en série.
